Europäisches Patentamt

European Patent Office

Office européen des brevets

(19)

(11) Veröffentlichungsnummer: **0 214 383**
**B1**

(12) # EUROPÄISCHE PATENTSCHRIFT

(45) Veröffentlichungstag der Patentschrift:
04.04.90

(51) Int. Cl.⁴: **G02B 6/00**, G02B 6/44

(21) Anmeldenummer: 86108555.3

(22) Anmeldetag: 23.06.86

(54) Einrichtung zum optischen Verbinden von Lichtwellenleitern.

(30) Priorität: 26.07.85 DE 3526843
26.07.85 DE 3526854
26.07.85 DE 3526853

(43) Veröffentlichungstag der Anmeldung:
18.03.87 Patentblatt 87/12

(45) Bekanntmachung des Hinweises auf die Patenterteilung:
04.04.90 Patentblatt 90/14

(84) Benannte Vertragsstaaten:
AT BE CH FR GB IT LI NL SE

(56) Entgegenhaltungen:
EP-A- 0 150 568
EP-A- 0 155 821
WO-A-85/04960
DE-A- 2 735 106
DE-U- 8 109 413
FR-A- 2 517 077
GB-A- 2 058 396
JP-A-60 140 206

PATENTS ABSTRACTS OF JAPAN, Band 7,
Nr. 267 (E-213)[1412], 29th November 1983; &
JP-A-58 151 139 (NIPPON DENSHIN DENWA
KOSHA) 08-09-1983

(73) Patentinhaber: Siemens Aktiengesellschaft,
Wittelsbacherplatz 2, D-8000 München 2(DE)

(72) Erfinder: Burmeister, Klaus-Dieter, Dipl.-Ing. (FH),
Kranzhornstrasse 10, D-8000 München 82(DE)

## Beschreibung

Die Erfindung bezieht sich auf eine Einrichtung gemäß Oberbegriff des Anspruchs 1.

Ein derartiges Trägerteil ist z.B. durch die DE-OS 32 35 723 und das DE-GM 81 09 413 bekannt geworden. Danach sind z.B. die ankommenden Leitungen im Randbereich des Trägerteils schleifenförmig verlegt und von einer geeigneten Stelle aus zu den einzelnen Kupplungen verzweigt.

Ferner ist es durch die JP-A 60 140 206 (=EP-0 150 568 A1) bekannt, ankommende und abgehende Lichtwellenleiter bogenförmig an nebeneinander gereihte Verbinderelemente heranzuführen und anzuschließen, wobei jeweils eines der Bündel einer Halbreihe der Verbinderelemente zugeordnet ist.

Außerdem ist nach der älteren europäischen Patentanmeldung WO 85/04960 ein Verteiler für Lichtwellenleiter mit frontseitig aus waagerechten Kabelkanälen bogenförmig an die Steckverbinder herangeführten Lichtwellenleitern versehen.

Der Erfindung liegt die Aufgabe zugrunde, das Trägerteil bei möglichst großem Krümmungsradius der Lichtwellenleiter zu verkleinern.

Diese Aufgabe wird durch die Erfindung gemäß Anspruch 1 gelöst. Durch die Aufteilung z.B. der ankommenden Leiter auf zwei getrennt geführte Bündel ist es möglich, die einzelnen Lichtleiter ohne Gegenkrümmung an die beiden Halbreihen heranzuführen. Dadurch kann das Trägerteil sehr kompakt gehalten werden, ohne den Mindestradius für die Lichtwellenleiter zu unterschreiten. Durch die Verzweigung der beiden Bündel ergibt sich eine gute Übersichtlichkeit und eine glatte Leitungsführung, was die Montage erleichtert.

Durch die Heranführung der Teilbündel wird der Leitungsverlauf weitgehend optimiert. Es ergeben sich besonders geringe Außenabmessungen des Trägerteils bei günstigen Krümmungsradien.

Durch die Weiterbildung nach Anspruch 2 wird eine klare räumliche Trennung der beiden Halbbündel erreicht, so daß eine gegenseitige Behinderung bei den Montagearbeiten vermindert wird.

Die Weiterbildung der Erfindung nach Anspruch 3 ermöglicht eine sehr flache Ausbildung des Trägerteils, da nun die Kupplungen nur wenig über die Oberfläche des Trägerteils hinausragen.

Durch die nutartigen Kanäle nach den Ansprüchen 4 und 5 werden die Lichtwellenleiter auf ihrer gesamten Länge gleichmäßig geführt, so daß die Knickgefahr weitgehend vermieden wird.

Im folgenden wird die Erfindung anhand eines in der Zeichnung dargestellten Ausführungsbeispieles näher erläutert:

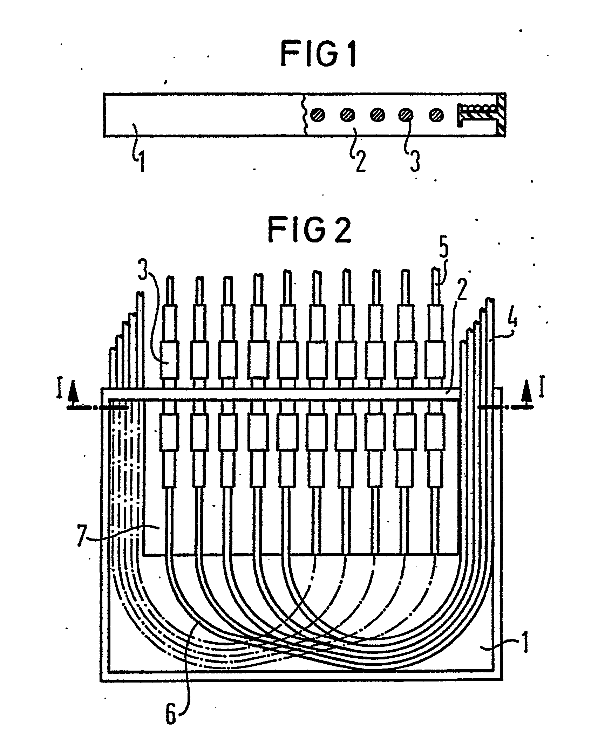

Die Fig. 1 und 2 zeigen in einer Seitenansicht und einer Draufsicht ein Trägerteil mit Kupplungen für Lichtwellenleiter und daran angeschlossenen Lichtwellenleitern, wobei in Fig. 1 ein Teilschnitt entlang der Linie I–I in Fig. 2 dargestellt ist.

Nach den Fig. 1 und 2 ist ein im wesentlichen plattenförmiges Trägerteil 1 mit einem Quersteg 2 versehen, an dem Kupplungen 3 von Lichtwellenleitern 4, 5 befestigt sind.

Die Kupplungen 3 sind in einer Reihe nebeneinander parallel zur Ebene des Trägerteils 1 angeordnet.

Ankommende Lichtwellenleiter 4 sind in zwei Bündel aufgeteilt, die zu beiden Seiten der Kupplungen 3 in deren Längsrichtung an das Trägerteil 1 herangeführt sind. Die beiden Teilbündel sind zu beiden Seiten des Trägerteils 1 an diesem gehalten. Die ankommenden Lichtwellenleiter 4 sind in ihrem Endabschnitt halbkreisförmig in sich zurückgebogen und an die Kupplungen 3 herangeführt. An die Gegenseite der Kupplungen 3 sind abgehende Lichtwellenleiter 5 angeschlossen. Die ankommenden Lichtwellenleiter 4 sind jeweils zur dem Teilbündel gegenüberliegenden Hälfte der Kupplungen 3 geführt. Sie überkreuzen sich im Mittelbereich des Trägerteils 1.

In die Oberfläche des Trägerteils 1 sind entsprechend dem Verlauf der Leiterenden nutartige Kanäle 6 eingelassen, in denen die Enden der ankommenden Lichtwellenleiter 4 genau geführt sind. Das Trägerteil 1 weist im Bereich der Kupplungen 3 einen großflächigen Durchbruch 7 auf, der sich erheblich über die Enden der Kupplungen 3 hinaus erstreckt. Die hülsenförmigen Kupplungen 3 liegen mit ihrem Mittelachsen in der Mittelebene des Trägerteils 1, so daß sie nur wenig über die Plattenoberfläche hinausragen. Dies ermöglicht eine sehr flache Ausführung des Trägerteils 1. Außerdem können die beiden Teilbündel der ankommenden Lichtwellenleiter 4 mit geringer Auslenkung senkrecht zur Plattenebene an die Kupplungen 3 herangeführt werden. Durch die Länge des Durchbruchs 7 ist es gewährleistet, daß die Kupplungen 3 ungehindert zusammengesteckt werden können.

Um die Enden der Lichtwellenleiter 4 sicher in den Kanälen 6 zu halten, ist es zweckmäßig, diese z.B. durch eine Halteplatte oder eine Klebefolie im Scheitelpunkt der Krümmung zu sichern.

## Patentansprüche

1. Einrichtung zum optischen Verbinden von ankommenden mit abgehenden Lichtwellenleitern, wobei die Einrichtung ein plattenförmiges Trägerteil (1) mit Lichtwellenleiterkupplungen (3) aufweist, die parallel zur Ebene des Trägerteils (1) reihenförmig nebeneinander angeordnet sind, wobei die in zwei getrennten Gruppen ankommenden Lichtwellenleiter (4) bogenförmig und getrennt am Trägerteil (1) an jeweils eine Halbreihe von Kupplungen (3) herangeführt und an diese angeschlossen sind, dadurch gekennzeichnet, daß die in einem Bündel ankommenden Lichtwellenleiter (4) zu zwei Teilbündeln verzweigt sind, die die beiden getrennten Gruppen bilden, daß die beiden Teilbündel jeweils an den beiden äußeren Kupplungen der Kupplungsreihe außen vorbeigeführt sind, daß jedes Teilbündel von dort aus halbkreisförmig zu der jeweils gegenüberliegenden Halbreihe der Kupplungen (3) verläuft und sich dabei mit den Lichtwellenleitern (4) des anderen Teilbündels spiegelbildlich überkreuzt.

2. Trägerteil nach Anspruch 1, dadurch gekennzeichnet, daß die Teilbündel zu beiden Seiten des Trägerteils (1) angeordnet sind und daß dieses einen großflächigen Durchbruch (7) aufweist, durch den die Leiter zumindest eines der Bündel an die Kupplungen (3) herangeführt sind.

3. Trägerteil nach Anspruch 2, dadurch gekennzeichnet, daß die Kupplungen (3) im Bereich des Durchbruchs (7) annähernd in der Mitte der Ebene des Trägerteils (1) angeordnet und an einem Quersteg (2) des Trägerteils (1) befestigt sind.

4. Trägerteil nach Anspruch 1, 2 oder 3, dadurch gekennzeichnet, daß das Trägerteil (1) nutartige Kanäle (6) aufweist, in denen die einzelnen Lichtwellenleiter (4) geführt sind.

5. Trägerteil nach Anspruch 4, dadurch gekennzeichnet, daß über den Kanälen (6) eine Klebefolie oder eine Halteplatte am Trägerteil befestigt ist.

## Claims

1. Device for optically connecting incoming to outgoing optical waveguides, the device having a plate-shaped support component (1) with optical waveguide couplings (3) which are arranged next to each other parallel to the plane of the support component (1) in rows, the incoming optical waveguides (4) being separated into two groups and being led in an arched fashion and separated at the support component (1) in each case to a semi-row of couplings (3) and being connected to the latter, characterized in that the optical waveguides (4) which come in in one bundle are branched into two semi-bundles which form the two separate groups, in that the two semi-bundles are in each case led past the two outer couplings of the coupling row on the outside, in that each semi-bundle runs from there in a semicircle to the respective opposite semi-row of couplings (3) and then crosses over the optical waveguides (4) of the other semi-bundle in a mirror-inverted fashion.

2. Support component according to Claim 1, characterized in that the semi-bundles are arranged on both sides of the support component (1) and in that the latter has a through-hole (7) with a large area, through which the waveguides of at least one of the bundles are led to the couplings (3).

3. Support component according to Claim 2, characterized in that the couplings (3) are arranged in the region of the through-hole (7) approximately in the centre of the plane of the support component (1) and are secured to a crossweb (2) of the support component (1).

4. Support component according to Claim 1, 2 or 3 characterized in that the support component (1) has groove-like channels (6) in which the individual optical waveguides (4) are guided.

5. Support component according to Claim 4, characterized in that an adhesive film or a fixing plate is secured over the channels (6) on the support component.

## Revendications

1. Dispositif pour relier optiquement des guides d'ondes optiques d'arrivée à des guides d'ondes optiques de départ, et comprenant un élément de support en forme de plaque (1) comportant des coupleurs (3) pour guides d'ondes optiques, qui sont disposés côte-à-côte suivant une rangée, parallèlement au plan de l'élément de support (1), les guides d'ondes optiques (4) arrivant selon deux groupes séparés étant guidés séparément et selon une disposition en arc de cercle jusqu'à une demi-rangée respective de coupleurs (3), sur l'élément de support (1), et se raccordant à cette demi-rangée de coupleurs, caractérisé par le fait que les guides d'ondes optiques (4), qui arrivent en format un faisceau, sont répartis en deux faisceaux partiels, qui forment les deux groupes séparés, que les deux faisceaux partiels s'étendent extérieurement respectivement à proximité des deux coupleurs extérieurs de la rangée de coupleurs et que chaque faisceau partiel s'étend, à partir de là, avec une forme semi-circulaire, jusqu'à la demi-rangée respectivement opposée des coupleurs (3) et croisent symétriquement les guides d'ondes optiques (4) de l'autre faisceau partiel.

2. Elément de support suivant la revendication 1, caractérisé par le fait que les faisceaux partiels sont disposés des deux côtés de l'élément de support (1) et que ce dernier possède un passage (7) de surface étendue, à travers lequel les guides d'ondes d'au moins l'un des faisceaux sont guidés jusqu'aux coupleurs (3).

3. Elément de support selon la revendication 2, caractérisé par le fait que les coupleurs (3) sont disposés, dans la zone du passage (7), approximativement au centre du plan de l'élément de support (1) et sont fixés à une barrette transversale (2) de cet élément de support.

4. Elément de support suivant la revendication 1, 2 ou 3, caractérisé par le fait que l'élément de support (1) possède des canaux en forme de rainures (6), dans lesquels s'étendent les différents guides d'ondes optiques (4).

5. Elément de support suivant la revendication 4, caractérisé par le fait qu'une feuille adhésive ou une plaque de retenue est fixée par-dessus les canaux (6), sur l'élément de support.

# FIG 1

# FIG 2